## Europäisches Patentamt
## European Patent Office
## Office européen des brevets

(19)

(11) Numéro de publication: **0 013 517**
**B1**

(12) **FASCICULE DE BREVET EUROPEEN**

(45) Date de publication du fascicule du brevet: **29.06.83**

(51) Int. Cl.³: **G 21 C 5/06, G 21 C 15/02**

(21) Numéro de dépôt: **79400977.9**

(22) Date de dépôt: **06.12.79**

(54) **Dispositif de maintien et d'alimentation d'un assemblage dans un réacteur nucléaire.**

(30) Priorité: **14.12.78 FR 7835201**

(43) Date de publication de la demande:
**23.07.80 Bulletin 80/15**

(45) Mention de la délivrance du brevet:
**29.06.83 Bulletin 83/26**

(84) Etats contractants désignés:
**BE DE GB IT NL**

(56) Documents cités:
**DE - A - 2 005 868**
**DE - B - 1 901 783**
**FR - A - 2 222 731**
**FR - A - 2 316 703**
**US - A - 3 763 886**
**US - A - 4 017 357**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Arnaud, Georges**
**6, Résidences Saint-Martin**
**F-04100 Manosque (FR)**
Inventeur: **Chiarelli, Gérard**
**Le Zola 1 - Bat D Chemin G. Borel**
**F-13100 Aix en Provence (FR)**

(74) Mandataire: **Mongrédien, André et al,**
**c/o BREVATOME 25, rue de Ponthieu**
**F-75008 Paris (FR)**

Courier Press, Leamington Spa, England.

Dispositif de maintien et d'alimentation d'un assemblage dans un réacteur nucléaire.

La présente invention a pour objet un dispositif de maintien et d'alimentation en liquide de refroidissement d'un assemblage pour réacteur nucléaire.

De façon plus précise, le dispositif selon la présente invention concerne une disposition particulière qui permet d'assurer d'une part le maintien en place des assemblages formant le coeur d'un réacteur nucléaire du type à neutrons rapides et qui, d'autre part, permet d'adapter le débit de liquide de refroidissement traversant chaque assemblage pour extraire les calories dégagées par celui-ci.

On sait que dans un réacteur nucléaire de ce genre, le coeur est habituellement supporté par un sommier rigide en appui contre le fond ou la virole d'une cuve principale qui entoure le coeur et contient un volume convenable de liquide de refroidissement qui est le plus souvent du sodium. La cuve peut contenir également, dans la solution dite intégrée, des échangeurs de chaleur et des pompes permettant de mettre en circulation le sodium à travers le coeur où il prélève les calories dégagées par la réaction de fission du matériau combustible avant de les restituer dans les échangeurs de chaleur à un fluide secondaire, puis d'être repris par des pompes de circulation pour être renvoyé sous le sommier en vue d'un nouveau passage dans le coeur. Les assemblages qui constituent le coeur sont disposés verticalement et chaque assemblage comprend un boîtier allongé ouvert à son extrémité supérieure contenant un faisceau d'aiguilles de combustible gainées et muni à son extrémité inférieure d'un pied de positionnement. Ce pied, dans les solutions classiques, sert à la fixation de l'assemblage sur le sommier et au réglage du débit de sodium traversant l'assemblage.

Par ailleurs, on sait que le coeur d'un réacteur nucléaire comporte une zone centrale où le combustible nucléaire à l'intérieur des aiguilles des assemblages est constitué par de la matière fissile, cette zone étant totalement entourée latéralement et également par dessus et par dessous par des couvertures de matière fertile. En conséquence, chaque assemblage combustible de cette zone centrale comporte, dans chaque aiguille, non seulement du matériau fissile, mais encore du matériau fertile. En outre, la couverture latérale est constituée par des assemblages semblables à ceux de la zone centrale, mais dans lesquels les faisceaux d'aiguilles ne contiennent que de la matière fertile. Enfin, cette dernière couverture est elle-même entourée par une protection neutronique latérale comportant plusieurs couronnes concentriques d'assemblages qui, à l'inverse des assemblages combustibles fissiles ou fertiles, ne contiennent pas de matériau nucléaire. Ces assemblages de protection disposés à la périphérie du coeur ont pour rôle d'empêcher l'activation du fluide secondaire qui traverse les échangeurs et de minimiser les dommages sur la cuve qui contient le sodium liquide en circulation.

De plus, d'autres types d'assemblages prévus dans le coeur du réacteur nucléaire et répartis à travers celui-ci sont prévus et viennent notamment s'insérer dans des logements ménagés entre les assemblages combustibles, ces assemblages constituant par leurs boîtiers allongés des fourreaux de guidage pour les organes de réglage, de pilotage ou de sécurité nécessaires au fonctionnement du réacteur. En outre, l'enrichissement du matériau fissile des assemblages combustibles varie selon leur position dans le coeur du réacteur nucléaire.

Il découle de l'ensemble des considérations précédentes que différents types d'assemblages sont utilisés dans le réacteur nucléaire et que le réglage du débit de sodium traversant ces assemblages doit être adapté à leur nature et à leur position dans le coeur du réacteur nucléaire.

Le brevet français no. 23 16 703 (au nom du demandeur) concerne un assemblage pour réacteur nucléaire à neutrons rapides et plus particulièrement les moyens de réglage du débit de sodium à travers le pied de l'assemblage. Sur la fig. 1 annexée, on a représenté l'assemblage décrit dans ce brevet.

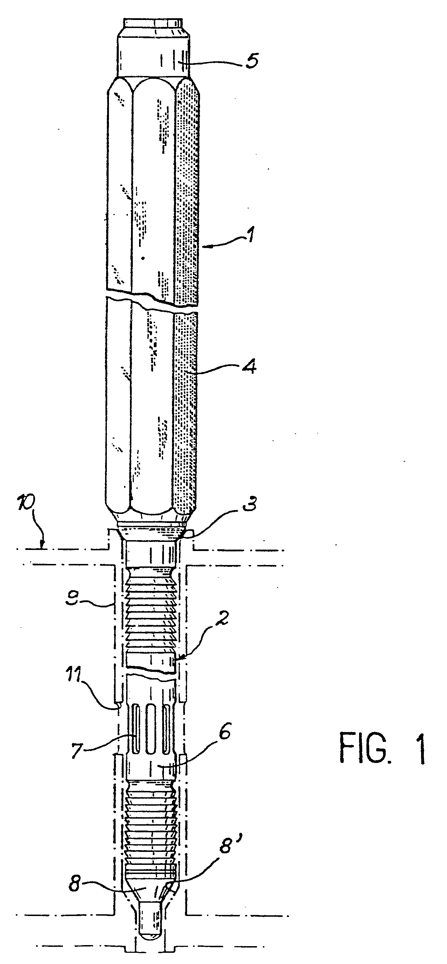

Sur cette fig. 1, la référence 1 désigne un assemblage, notamment adapté pour être monté dans le coeur d'un réacteur nucléaire à neutrons rapides et à refroidissement par un métal liquide. Cet assemblage comporte à son extrémité inférieure un pied de positionnement, formé par un corps cylindrique creux 2, celui-ci étant réuni par un pièce à portée sphérique 3 à un boîtier ouvert 4, disposé dans le prolongement du pied. Ce boîtier 4 se termine à son extrémité supérieur par une tête 5 dont le détail de réalisation importe peu à la présente invention. Dans sa partie médiane, le corps 2 comporte une zone 6 dans laquelle sont ménagées des ouvertures oblongues 7, régulièrement réparties autour de son axe, permettant au métal liquide de refroidissement de circuler dans le pied en pénétrant dans celui-ci par ces ouvertures avant de s'écouler de bas en haut, d'abord dans le corps 2 puis dans le boîtier 4, avant de sortir de ce dernier par sa tête supérieure ouverte 5. A son extrémité inférieure, le corps 2 est obturé par un bouchon 8, fixé sur le pied par tout moyen approprié. Selon une disposition classique, le corps 2 est maintenu en position verticale par engagement dans une chandelle creuse 9, appartenant à un sommier de support du coeur du réacteur, schématisé sur le dessin sous la référence 10. Cette chandelle comporte des lumières 11, prévues dans sa surface latérale sensiblement au droit des ouvertures 7, dans le corps 2, afin de permettre au métal liquide de refroidissement, refoulé sous pression dans le sommier 10, de pénétrer dans l'assemblage et de s'écouler de bas en haut de celui-ci. Le corps 2 repose sur la partie supérieure de la chandelle 9 par sa portée d'appui 3, le bouchon 8 s'engageant dans un logement 8' prévu à la base de la chandelle, au voisinage de la partie inférieure de sommier 10.

Il faut ajouter qu'à l'intérieur du pied 2 et au-dessus des ouvertures oblongues 7, le pied comporte intérieurement des diaphragmes permettant de régler le débit de sodium. En outre, le bouchon inférieur 8 par sa forme particulière coopérant avec la forme particulière du logement 8' permet d'éviter une erreur dans la mise en place de l'assemblage.

Il découle de la description précédente de l'art antérieur que le débit de sodium est réglé par des dispositions qui font partie intégrante de l'assemblage proprement dit. En outre, pour assurer les conditions de fonctionnement adéquates, ce pied doit avoir une hauteur importante. Il s'ensuit que le poids de l'assemblage combustible et en particulier la partie de ce poids due au pied est importante. Or, ces assemblages doivent être manipulés lors des opérations de chargement et de déchargement du réacteur nucléaire.

La présente invention a précisément but de permettre, dans un dispositif pour le maintien et le réglage de l'alimentation en métal liquide réfrigérant d'assemblages pour réacteur nucléaire à neutrons rapides selon le préambule de la revendication 1, de diminuer sensiblement le poids et la hauteur des assemblages et, d'autre part, de dissocier la partie active de l'assemblage des organes de réglage du débit de réfrigérant devant le traverser.

Selon l'invention, ce but est affeint par les moyens figurant dans la partie caractérisante de la revendication 1. En résumé, c'est une pièce amovible supplémentaire de maintien qui selon l'invention est prévue, cette pièce s'insérant dans une chandelle solidaire du sommier et recevant à son tour le pied de l'assemblage; celui-ci pent donc ihre de longeur réduite pas rapport à l'art antérieur. Il est particulièrement important de noter que cette pièce supplémentaire comporte tous les organes de réglage du débit de réfrigérant devant traverser l'assemblage qu'elle doit supporter. En d'autres termes, on dissocie la fonction de réglage du débit de réfrigérant de la fonction neutronique que remplit l'assemblage concerné. En outre, ce dispositif de maintien permet par des dispositions appropriées d'assurer le verrouillage hydraulique de l'assemblage dans le sommier, c'est-à-dire d'éviter l'envol de celui-ci sous l'effet de la circulation ascendante du liquide de refroidissement à travers l'assemblage.

De toute façon l'invention sera mieux comprise à la lecture de la description qui suit d'un mode de réalisation de l'invention, donné à titre d'exemple non limitatif. La description se réfère aux figures annexées sur lesquelles on a représenté:

— sur la fig. 1 déjà décrite, un vue en élévation d'un assemblage selon l'art antérieur;

— sur la fig. 2, une vue en coupe verticale de deux assemblages combustibles selon l'invention;

— sur la fig. 3, une vue en coupe horizontale selon le plan III—III de la fig. 2, et

— sur la fig. 4, une vue en coupe horizontale selon la ligne IV—IV de la fig. 2 montrant le lestage des pièces porteuses.

Dans la description qui suit, on ne considèrera que les dispositions nécessaires pour le maintien d'un assemblage combustible sur le sommier et la réglage des débits de réfrigérant, c'est-à-dire qu'en fait on ne décrira pas l'assemblage dans sa totalité. Bien entendu, la description qui suit s'applique à tous les types d'assemblages, qu'ils soient combustibles, fertiles ou d'un autre type.

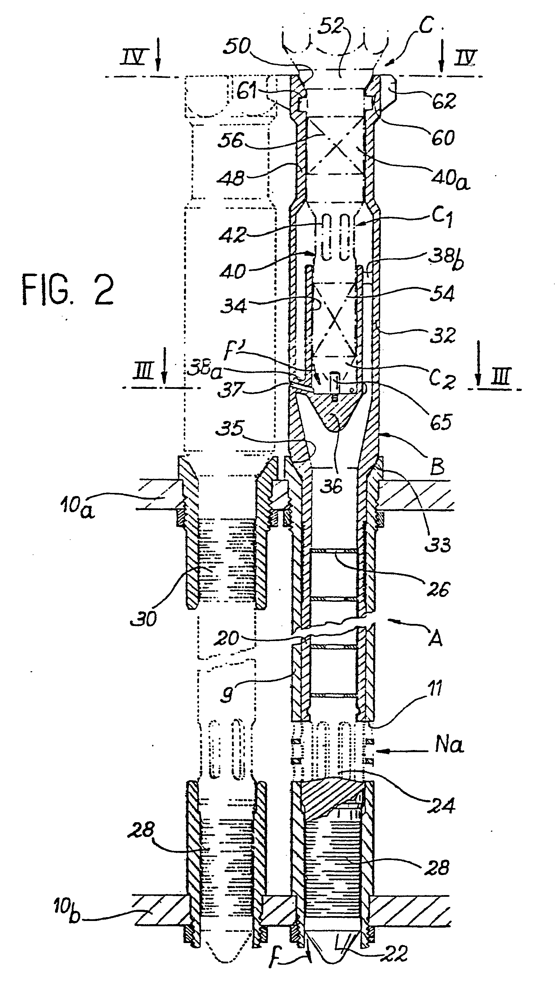

Sur la fig. 2, on trouve le sommier A, la pièce porteuse B et l'assemblage combustible C avec en particulier son pied $C_1$. D'une manière générale, on peut dire que selon l'invention, la pièce porteuse B est introduite dans le sommier et porte l'assemblage combustible C par son pied $C_1$ tout en permettant de régler le débit de sodium traversant l'assemblage combustible.

On va maintenant décrire plus en détail les différentes parties de l'invention. Le sommier A est constitué par deux plaques sensiblement horizontales et parallèles entre elles 10a et 10b dans lesquelles sont fixées les chandelles 9. Celles-ci sont munies de séries d'orifices 11 permettant l'introduction dans l'assemblage d'un débit de sodium sous pression provenant du sommier. La pièce porteuse B est constituée dans sa partie basse par un fourreau cylindrique 20 fermé à son extrémité inférieure par un bouchon tronconique 22. Ce corps ou fousseau cylindrique 20 comporte des ouvertures oblongues 24 qui sont mises en communication avec les orifices 11 ménagés dans les chandelles lorsque la pièce porteuse B est mise en place. Dans sa partie contenue dans la chandelle 9, le corps cylindrique 20 comporte intérieurement des diaphragmes tels que 26 qui permettent de régler le débit de sodium à l'intérieur de la pièce porteuse et donc à l'intérieur de l'assemblage combustible. Ils sont semblables à ceux qui ont été décrits dans le brevet française déjà cité. On comprend que cette partie inférieure 20 de la pièce porteuse B joue exactement le même rôle que le corps cylindrique 2 du pied de l'assemblage selon l'art antérieur, mais que cette partie n'est pas solidaire de l'assemblage proprement dit. L'emmanchement entre la chandelle 9 et le corps ou fourreau cylindrique 20 est réalisé avec un jeu, d'où il résulte qu'une faible fraction du débit du sodium entrant par les orifices 11 n'alimentera pas les orifices oblongs 24 de la pièce porteuse B. Pour limiter ce débit de fuite, on a prévu sur la face externe du corps 20 des labyrinthes 28 et 30 disposés de part et d'autre des orifices oblongs 24. On obtient ainsi, à la partie basse de la chandelle 9, un débit de fuite $f$ de sodium liquide, à basse pression, c'est-à-dire à une pression très réduite par rapport à la pression d'entrée du sodium dans la pièce porteuse B.

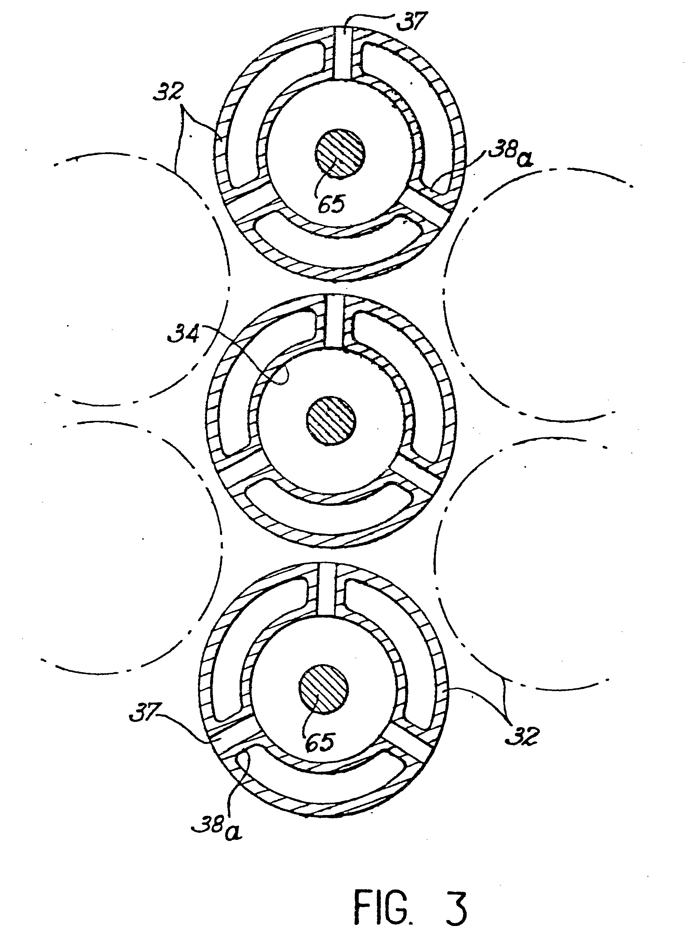

La pièce porteuse B comporte au-dessus du corps cylindrique 20 une partie haute cylindrique 32 raccordée au corps ou fourreau cylindrique 20 par une portée tronconique 33. Cette portée 33 coopère avec une portée sphérique 35 ménagée à la partie supérieure de la chandelle 9 pour servir de supportage à la pièce porteuse B. Cette partie haute 32 va servir, d'une part, au supportage de l'assemblage combustible proprement dit C et d'autre part, à l'alimentation de cet assemblage en réfrigérant. Dans ce but, la partie haute 32 comporte intérieurement un tube coaxial 34 fermé par un fond 36. Ce tube 34 est solidarisé à la partie 32 par deux séries de trois entretoises à 120°, 38a et 38b, convenablement profilées pour ne pas perturber l'écoulement du sodium, comme cela est représenté sur la fig. 3. Des orifices tels que 37, ménagés dans les entretoises 38a mettent en communication l'intérieur de tube 34 avec le sodium situé à l'extérieur de la pièce porteuse B. Le pied de l'assemblage proprement dit $C_1$ comporte également un corps creux 40 muni d'orifices oblongs 42 qui sont situés au-dessus du tube 34 lorsque l'assemblage combustibles est mis en place. La partie haute 32 comporte une portion de diamètre réduit 48 apte à coopérer avec la partie 40a du pied de l'assemblage combustible. En d'autres termes, le pied de l'assemblage combustible est enfilé d'une part dans le tube 34 et, d'autre part dans la partie de diamètre réduit 48 de la partie haute 32 de la pièce porteuse. Cette pièce porteuse comporte à l'extrémité supérieure de sa partie haute une portée tronconique 50 qui coopère avec une portée sphérique correspondante 52 ménagée dans l'assemblage combustible proprement dit. Pour limiter le débit de fuite entre le pied $C_1$ de l'assemblage combustible et la partie haute 32 de la pièce porteuse, on a prévu également sur la face externe du pied de l'assemblage combustible deux labyrinthes 54 (à l'intérieur du tube 34) et 56 (à l'intérieur de la partie de diamètre réduit 48). On obtient ainsi un faible débit de fuite $f'$ de sodium dont la pression est inférieure à celle qui est introduite dans l'assemblage combustible proprement dit. La partie de diamètre réduit 48 facilite l'écoulement radial de ce débit de fuite $f'$.

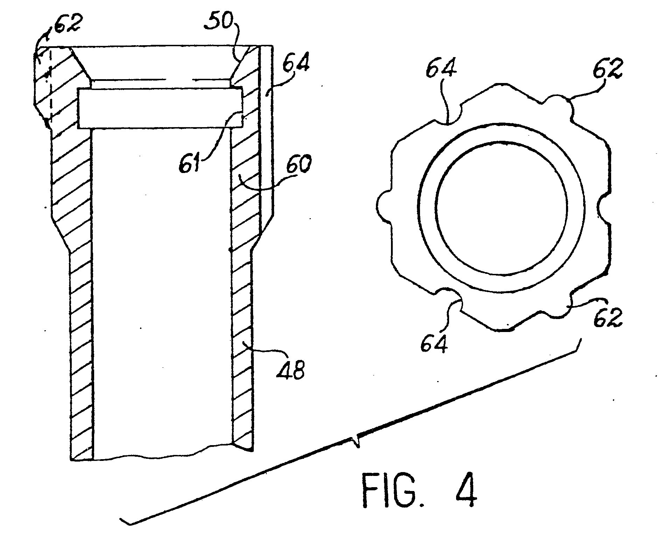

L'extrémité supérieure de la pièce porteuse qui est référencée 60, est de préférence à section hexagonale. En outre, trois ergots 62 assurent le lestage d'une pièce porteuse par les assemblages adjacents. Comme représenté sur la fig. 4, chaque pièce porteuse comprend trois ergots 62 et trois encoches 64, de dimensions correspondantes, disposés alternativement.

Cet agencement est destiné à faciliter les opérations de manutention effectuées à l'arrêt du réacteur. On peut ainsi décharger un assemblage sans risque d'entraîner la pièce porteuse correspondante. On peut aussi, si nécessaire, décharger ou introduire une pièce porteuse, celle-ci étant munie à cet effet d'une gorge de préhension 61.

On comprend à la suite de la description précédente qu'il existe dans le réacteur en fonctionnement normal un double système der verrouillage hydraulique. Un premier verrouillage hydraulique est assuré entre la pièce porteuse B et la chandelle 9 du sommier du fait que par le contrôle du débit de fuite à basse pression f réalisé par le labyrinthe 28 et l'alésage de la chandelle 9, on crée autour de l'extrémité inférieure de la pièce porteuse B une zone à basse pression qui est à comparer à la haute pression entre les deux plaques du sommier et au-dessus du labyrinthe 28. Un deuxième verrou hydraulique est assuré entre l'assemblage combustible C proprement dit et la pièce porteuse B. Ce deuxième verrou hydraulique est réalisé par le labyrinthe 54 prévu à l'extrémité inférieure du pied $C_1$ de l'assemblage combustible et l'alésage du tube 34. Ce labyrinthe 54 crée également une zone de basse pression en-dessous du pied $C_1$ et s'oppose ainsi à la zone de haute pression réalisée au-dessus du labyrinthe 54.

Par ailleurs, les labyrinthes 30 et 56 sont destinés à créer une fuite à débit et à pression contrôlés protégeant ainsi les surfaces en contact des portées sphèrecône (35—33 et 52—50) contre les risques de cavitation. En outre, cette fuite contrôlée est bénéfique car elle produit un écoulement radial assurant le refroidissement des structures placées à la périphérie du coeur.

On comprend aisément à la suite de la description précédente que l'invention se distingue notablement des techniques de maintien et de réglage du débit de liquide de refroidissement de l'art antérieur. En effet, la fonction réglage de débit est rendue indépendante de l'assemblage proprement dit car la pièce porteuse B remplit à la fois un rôle de maintien par rapport au sommier et cette fonction de réglage du débit. Il s'ensuit que le pied $C_1$ de l'assemblage a une longueur considérablement réduite, ce qui implique que le poids de ce pied est considérablement diminué par rapport aux solutions classiques. En outre, on comprend que dans les techniques classiques lorsque l'assemblage ou plus précisément sa partie fertile ou fissile était épuisée, il était nécessaire de procéder au déchargement de l'assemblage, dont le pied faisait partie intégrante, et par conséquent les moyens de réglage du débit contenus dans celui-ci n'étaient plus réutilisables. Au contraire, selon les dispositions de la présente invention, lorsque l'assemblage ou plus précisément sa partie fertile ou fissile est épuisée, la pièce porteuse reste en place dans le sommier et peut être réutilisée avec un nouvel assemblage.

L'invention permet ainsi de standardiser les assemblages positionnés à l'intérieur d'une même zone d'enrichissement donné, celle-ci pouvant être combustible ou fertile. Il est alors possible d'effectuer à l'intérieur d'une telle zone des réarrangements d'assemblages sans avoir à modifier le réglage du débit de réfrigérant alimentant les assemblages concernés.

De plus, comme cela est très clairement expliqué dans le brevet français n° 23 016 703 déjà cité, chaque bouchon inférieur du pied de l'assemblage (référencé 8 sur la fig. 1) comporte une forme particulière mâle, coopérant avec une forme correspondante femelle de l'extrémité inférieure de la chandelle (référencée 8' sur la fig. 1), ceci ayant pour but d'éviter une erreur de positionnement lors de la mise en place des assemblages.

On retrouve la même disposition référencée 65 sur la fig. 2, entre le fond 36 du tube 34 et le bouchon inférieur $C_2$ du pied $C_1$ de l'assemblage. Cependant, dans le cas de l'art antérieur, le nombre d'assemblages de types différents était très important puisque ce nombre devait prendre en compte les différents organes de réglage du débit de sodium faisant partie intégrante de l'assemblage. En conséquence, on devait disposer d'un grand nombre de formes particulières pour ces éléments de positionnement, ce qui rendait l'usinage plus complexe et augmentait la hauteur de cette partie spécifique.

Au contraire, grâce aux dispositions de l'invention, et plus précisément au fait que les organes de réglage du débit ne sont plus dans l'assemblage, le nombre de formes différentes est très réduit.

En outre, les pièces porteuses jouent un triple rôle d'écran protecteur car elles assurent:

— la protection neutronique du sommier en réduisant les dommages dus à l'irradiation. Or, on sait que le sommier constitue généralement une structure fixe et indémontable;

— la protection mécanique du sommier en cas de chute accidentelle d'assemblages;

— une prérécupération de combustible fondu dans le cas de l'accident hypothétique de fusion du combustible.

Il faut également observer que, bien que la pièce porteuse soit, dans une utilisation normale, destinée à rester en place dans le sommier lors des opérations de rechargements et de déchargements en assemblages combustibles, cette pièce est amovible par rapport au sommier. En conséquence, si une défaillance se produisait sur les pièces porteuses, il est aisé de les extraire de la cuve puisqu'aucune liaison mécanique n'existe entre ces pièces et la sommier.

L'invention n'est nullement limitée à l'exemple de réalisation qui vient d'être plus spécialement décrit et représenté; elle en embrasse au contraire toutes les variantes.

C'est ainsi que dans tous les cas où le débit de réfrigérant et le poids de l'assemblage sont tels que le réfrigérant n'exerce pas sur l'assemblage une poussée tendant à soulever celui-ci, on peut remplacer l'alimentation radiale de l'assemblage par une alimentation axiale plus facile à réaliser. Le pied de l'assemblage peut en effet être constitué par un simple tube ouvert en bout. Dans ce cas, la pièce porteuse se trouve également simplifiée dans sa partie haute puisque l'on peut alors supprimer le tube coaxial 34 et les entretoises associées.

Par ailleurs, il doit être bien entendu que l'on peut remplacer les labyrinthes par tout autre moyen équivalent ayant pour effet de créer une perte de charge. A titre d'exemple on peut utiliser des segments.

**Revendications**

1. Dispositif de maintien et d'alimentation en métal liquide de refroidissement pour des assemblages de différents types faisant partie du coeur d'un réacteur nucléaire refroidi par un métal liquide et comportant un sommier (10) de supportage du coeur muni de chandelles creuses verticales (9), ledit sommier (10) formant un réservoir de métal liquide à haute pression entouré au-dessus et en-dessous par des zones de métal liquide à basse pression, chacun desdits assemblages comportant un pied ($C_1$) constitué par un corps creux de forme générale cylindrique (40), ledit dispositif étant caractérisé en ce qu'il consiste en une pièce porteuse creuse (B), de forme générale cylindrique comportant une partie haute (32) pourvue à son extrémité supérieure (60) d'une portée interne cylindrique apte à recevoir avec jeu le pied ($C_1$) de l'assemblage correspondant, celui-ci étant muni d'au moins un orifice (42) d'alimentation en métal liquide, et une partie basse (20) obturée à son extrémité inférieure par un bouchon (22) et apte à être introduite avec jeu dans l'une desdites chandelles (9) sur l'extrémité supérieure (33) de laquelle elle repose au moyen d'une portée d'appui (35), ladite partie basse (20) étant munie d'orifices (24) aptes à coïncider avec des orifices (M) ménagés dans ladite chandelle pour permettre l'alimentation en métal liquide (Na) et comportant intérieurement des organes (26) de réglage du débit de métal liquide, ladite partie basse (20) comportant sur sa face externe des moyens (28) pour créer une perte de charge disposés en-dessous de ses orifices d'alimentation, lesdits moyens étant aptes à créer avec la partie correspondante de la chandelle une première perte de charge pour un débit de fuite (f) de métal liquide dirigé vers le dessous du sommier.

2. Dispositif selon la revendication 1, caractérisé en ce que ladite partie haute (32) de la pièce porteuse (B) comporte vers son extrémité inférieure un tube coaxial (34) fermé par un fond (36) et destiné à recevoir avec jeu l'extrémité inférieure du pied de l'assemblage (1) et en ce que ledit pied est obturé à son extrémité inférieure par un bouchon (C₂) et muni d'une pluralité desdits orifices (42) d'alimentation en métal liquide disposée entre ledit tube (34) et ladite portée interne cylindrique.

3. Dispositif selon la revendication 2, caractérisé en ce que le pied de l'assemblage (1) comporte en-dessous de ses orifices d'alimentation des moyens à labyrinthe (54) aptes à coopérer avec la partie correspondante dudit tube (34) pour créer une deuxième perte de charge pour un débit de fuite (f′) de métal liquide, en ce que ledit tube est solidarisé à la partie haute (32) de la pièce porteuse (B) par des entretoises (38a) situées en-dessous desdits moyens labyrinthe (54), et en ce qu'au moins une de ces entretoises (38a) est munie d'un orifice (37) débouchant en dehors de ladite pièce porteuse et par lequel s'écoule vers l'extérieur ledit débit de fuite (f′).

4. Dispositif selon l'une quelconque des revendications 1 à 3, caractérisé en ce que ladite pièce porteuse (B) comporte au-dessus de ses orifices d'alimentation (24) un labyrinthe (30) apte à coopérer avec la partie correspondante de ladite chandelle pour créer une perte de charge pour un débit de fuite de métal liquide dirigé vers l'extérieur de ladite pièce porteuse (B).

5. Dispositif selon l'une quelconque des revendications 1 à 4, caractérisé en ce que ledit pied d'assemblage (C₁) comporte au-dessus de ses orifices d'alimentation (42) un labyrinthe (56) apte à coopérer avec la partie correspondante de ladite pièce porteuse (B) pour créer une perte de charge pour un débit de fuite de métal liquide dirigé vers l'extérieur dudit pied d'assemblage (C₁).

6. Dispositif selon l'une quelconque des revendications 1 à 5, caractérisé en ce que ladite pièce porteuse (B) comporte à l'extrémité supérieure (60) de sa partie haute une portion à section extérieure hexagonale munie de trois ergots (62) et de trois encoches (64), de dimensions correspondantes, disposés alternativement.

7. Dispositif selon l'une quelconque des revendications 1 à 6, caractérisé en ce que ledit pied d'assemblage (C₁) est obturé à son extrémité inférieure par un bouchon (C₂) qui comporte des moyens (65) évitant l'erreur de positionnement constitués par une pièce mâle ou femelle apte à coopérer avec une pièce femelle ou mâle prévue sur ledit fond du tuve coaxial (34).

**Patentansprüche**

1. Einrichtung zum Halten und zur Speisung mit flüssigem Kühlmetall für Elemente unterschiedlichen Typs, welche einen Teil des Kernes eines Kernreaktors bilden, der durch ein flüssiges Metall gekühlt ist und einen Träger (10) zum Stützen des Kernes aufweist, der mit hohlen, vertikalen Verstrebungen (9) versehen ist, wobei der Träger (10) einen Vorratsbehälter für flüssiges Metall mit hohem Druck aufweist, oben und unten durch Bereiche aus flüssigem Metall mit niedrigem Druck umgeben, und wobei jedes der Elemente einen Fuß (C₁) aufweist, der durch einen allgemeinen zylinderförmigen Hohlkörper (40) gebildet ist, dadurch gekennzeichnet, daß die Eintrichtung aus einem hohlen, tragenden, allgemein zylinderförmigen Teil (B) besteht, das einen oberen Abschnitt (32) aufweist, der an seinem oberen Ende (60) mit einer zylindrischen Innenöffnung versehen ist, die dazu eingerichtet ist, mit Spiel den Fuß (C₁) des entsprechenden Elementes aufzunehmen, welcher seinerseits mit mindestens einer Öffnung (42) zum Einspeisen von flüssigem Metall versehen ist, sowie einen unteren Abschnitt (20), der an seinem unteren Ende durch einen Deckel (22) versperrt ist und dazu eingerichtet ist, mit Spiel in eine der genannten Verstrebungen (9) eingeführt zu werden, wobei dieser Abschnitt auf dem oberen Ende (33) der Verstrebung mittels einer Auflagefläche (35) ruht, der untere Abschnitt (20) mit Öffnungen (24) versehen ist, die dazu eingerichtet sind, mit den Öffnungen (11) übereinzustimmen, die in die genannte Verstrebung eingebracht sind, um die Einspeisung mit flüssigem Metall (Na) zu gestatten, und im Inneren Regulierorgane (26) für den Durchsatz an flüssigem Metall aufweist, der untere Abschnitt (20) auf seiner Außenfläche Mittel (28) zum Erzeugen eines Druckverlustes aufweist, die unterhalb ihrer Einspeiseöffnung angeordnet sind, und die Mittel dazu eingerichtet sind, zusammen mit dem entsprechenden Teil der Verstrebung einen ersten Druckverlust für einen Leckagedurchsatz (f) an flüssigem Metall zu erzeugen, welcher zur Unterseite des Trägers gelenkt wird.

2. Einrichtung nach Anspruch 1, dadurch gekennzeichnet, daß der obere Teil (32) des tragenden Teils (B) zu seinem unteren Ende hin ein koaxiales Rohr (34) aufweist, welches durch einen Boden (36) geschlossen ist und dazu bestimmt ist, mit Spiel das untere Ende des Fußes des Elementes (C₁) aufzunehmen, und daß der genannte Fuß an seinem unteren Ende durch einen Deckel (C₂) verschlossen ist und mit der Vielzahl der genannten Öffnungen (42) zum Einspeisen von flüssigem Metall versehen ist, welche zwischen dem genannten Rohr (34) und der genannten, zylindrischen Innenöffnung angeordnet sind.

3. Einrichtung nach Anspruch 2, dadurch gekennzeichnet, daß der Fuß des Elementes (C₁) unterhalb seiner Einspeiseöffnungen eine Labyrintheinrichtung (54) aufweist, welche dazu eingerichtet ist, mit dem entsprechenden Teil des Rohres (34) zusammenzuwirken, um einen zweiten Druckabfall für einen Leckagedurchsatz (f′) an flüssigem Metall zu erzeugen, daß das genannte Rohr am hochgelegenen Teil (32) seines tragenden Abschnitts (B) mit Stegen (38a) versehen ist, welche unterhalb der Labyrintheinrichtung (54) sitzen, und daß mindestens einer dieser Stege (38a) mit einer Öffnung (37) versehen ist, welche von außerhalb des genannten tragenden Teils aus einmündet und durch welche der genannte Leckagedurchsatz (f') nach außen abfließt.

4. Einrichtung nach einem der Ansprüche 1 bis 3, dadurch gekennzeichnet, daß das tragende Teil (B) oberhalb seiner Speiseöffnungen (24) ein Labyrinth (30) aufweist, welches dazu eingerichtet ist, mit dem entsprechenden Abschnitt der Verstrebung zusammenzuwirken, um einen Druckabfall für einen Leckagedurchsatz an flüssigem Metall zu erzeugen, welcher zur Außenseite des genannten tragenden Teils (B) gerichtet ist.

5. Einrichtung nach einem der Ansprüche 1 bis 4, dadurch gekennzeichnet, daß der Fuß des Elementes (C₁) oberhalb seiner Speiseöffnungen (42) ein Labyrinth (56) aufweist, welches dazu eingerichtet ist, mit dem entsprechenden Abschnitt des tragenden Teils (B) zusammenzuwirken, um einen Druckabfall für einen Leckagedurchsatz an flüssigem Metall zu erzeugen, welcher zur Außenseite des genannten Fußes des Elementes (C₁) gerichtet ist.

6. Einrichtung nach einem der Ansprüche 1 bis 5, dadurch gekennzeichnet, daß das tragende Teil (B) am oberen Teil (60) seines oberen Abschnitts einen Abschnitt mit sechseckigem Außenquerschnitt aufweist, welcher mit drei Vorsprüngen (62) und drei Vertiefungen (64) mit entsprechenden Abmessungen versehen ist, welche alternierend angeordnet sind.

7. Einrichtung nach einem der Ansprüche 1 bis 6, dadurch gekennzeichnet, daß der Fuß des Elementes (C₁) an seinem unteren Ende durch einen Deckel (C₂) verschlossen ist, der Einrichtungen (65) umfaßt, welche einen Positionierungsfehler vermeiden und von einem Vater- oder Mutterstück gebildet sind, welches dazu eingerichtet ist, mit einem Mutter- oder Vaterstück zusammenzuwirken, welches auf dem Boden des koaxialen Rohres (34) vorgesehen ist.

## Claims

1. Device for supporting and feeding liquid metal coolant for assemblies of different types forming part of the core of a liquid metal-cooled nuclear reactor and comprising a core-support beam (10) with hollow vertical supports (9), said beam (10) delimiting a reservoir for liquid metal at high pressure, above and below which are zones of liquid metal at low pressure, each of said assemblies having an internal member (C₁) comprising a hollow body of substantially cylindrical form (40), said device being characterized in that it comprises a hollow bearing member (B) of substantially cylindrical form, with an upper part (32) having at its top (60) an internal cylindrical seating adapted to receive, with a loose fit, the internal member (C₁) of the corresponding assembly, itself having at least one liquid metal entry port (42), and a lower part (20) closed by a stopper (22) at its lower end, and adapted to fit loosely into one of said supports (9), at whose upper end (33) it is held by a support bearing (35), said lower part (20) having ports (24) adapted to coincide with ports (11) formed in the said support to allow entry of liquid metal (Na) and having internal flow-control means (26) for liquid metal, said lower part (20) having on its external surface and below the entry ports, pressure drop means (28) said means being adapted to cooperate with the corresponding part of the vertical support to provide a first pressure drop for an outlet flow (f) of liquid metal directed downwardly of the beam.

2. Device according to Claim 1 characterized in that said upper part (32) of the bearing member (B) has near its lower end a coaxial tube (34) closed at its base (36) and adapted to receive, with a loose fit, the lower end of the internal member of the assembly (C₁), and in that said internal member is closed at its lower end by a stopper (C₂) and has a plurality of said liquid metal entry ports (42) located between said tube (34) and the said internal cylindrical bearing.

3. Device according to Claim 2 characterized in that the internal member of the assembly (C₁) has below its entry ports a labyrinth (54) adapted to cooperate with the corresponding part of said tube (34) to provide a second pressure drop for an outlet flow (f') of liquid metal, and in that said tube is joined to the upper part (32) of the bearing member (B) by struts (38a) located below said labyrinth (54), and in that at least one of the struts (38a) has a bore (37) opening outside said bearing member and through which said outlet flow (f') leaves.

4. Device according to any one of Claims 1 to 3 characterized in that said bearing member (B) has above its entry ports (24) a labyrinth (30) adapted to cooperate with the corresponding part of said support to provide a pressure drop for an outlet flow of liquid metal directed towards the exterior of said bearing member (B).

5. Device according to any one of Claims 1 to 4 characterized in that the said internal member of assembly (C₁) has above its entry ports (42) a labyrinth (56) adapted to cooperate with the corresponding part of said bearing member (B) to provide a pressure drop for an outlet flow of liquid metal directed towards the exterior of said internal member of assembly (C₁).

6. Device according to any one of Claims 1 to 5 characterized in that said bearing member (B) has at the top (60) of its upper portion, a portion having a hexagonal external section with three lugs (62) and three recesses (64), of corresponding dimensions, alternately disposed.

7. Device according to any one of Claims 1 to 6 characterized in that said internal member of

assembly $(C_1)$ is closed at its lower end by a stopper $(C_2)$ having means (65) for avoiding errors in positioning, comprising a male or female member adapted to cooperate with a female or male member provided at the said base of the coaxial tube (34).

0013517

FIG. 1

1

FIG. 2

FIG. 3

0013517

FIG. 4